# EUROPÄISCHE PATENTSCHRIFT

(11) **EP 2 795 075 B1**
(45) Veröffentlichungstag und Bekanntmachung des Hinweises auf die Patenterteilung: **06.04.2016**
(21) Anmeldenummer: 12810105.2
(22) Anmeldetag: 19.12.2012
(51) Int. Cl.: F01N 3/02, F02B 37/02, F02B 29/08

(54) **VERFAHREN ZUM BETREIBEN EINES ANTRIEBSAGGREGATES UND ANTRIEBSAGGREGAT**
METHOD FOR OPERATING A DRIVE ASSEMBLY AND DRIVE ASSEMBLY
PROCÉDÉ DE FONCTIONNEMENT D'UN GROUPE MOTOPROPULSEUR ET GROUPE MOTOPROPULSEUR

(30) Priorität: 24.12.2011 DE 102011122442
(43) Veröffentlichungstag der Anmeldung: 29.10.2014
(73) Patentinhaber: Volkswagen Aktiengesellschaft, 38440 Wolfsburg (DE)
(72) Erfinder: HOFFMEYER, Henrik, 30161 Hannover (DE); GNEGEL, Paul, 38165 Lehre (DE); LINDENKAMP, Nils, 38126 Braunschweig (DE); THEOBALD, Jörg, 38165 Lehre (DE)
(86) Internationale Anmeldenummer: PCT/EP2012/005261
(87) Internationale Veröffentlichungsnummer: WO 2013/091849

(56) Entgegenhaltungen:
- EP-A2- 1 688 601
- US-A- 4 010 613
- US-A- 4 214 443
- US-A1- 2004 103 648
- US-A1- 2004 221 820
- US-A1- 2009 120 418
- US-A1- 2010 199 666

## Beschreibung

Die vorliegende Erfindung betrifft ein Verfahren zum Betreiben eines Antriebsaggregat mit den Merkmalen gemäß dem Oberbegriff des Anspruchs 1. Die Erfindung betrifft des Weiteren ein Antriebsaggregat mit den Merkmalen gemäß dem Oberbegriff des Anspruchs 10.

Diese Anmeldung beansprucht die Priorität des deutschen Patentanmeldung DE 10 2011 122 442.8 vom 24.12.2011. Der Offenbarungsgehalt dieses Dokument wird hiermit in vollem Umfang in die Offenbarung der vorliegenden Anmeldung einbezogen.

In Fahrzeugen, wie z. B. Personenkraftwagen oder Lastkraftwagen, werden üblicherweise als Verbrennungsmotoren ausgeführte Antriebsaggregate zum Antreiben des Fahrzeugs verwendet. Die Verbrennungsmotoren sind üblicherweise Ottomotoren oder Dieselmotoren. Um Betriebskosten und Emissionen der Fahrzeuge zu verringern und die Leistungsfähigkeit sowie den Komfort des Fahrzeugs zu erhöhen, sind in der Vergangenheit eine, Vielzahl von diesbezüglichen Verbesserungen für Verbrennungsmotoren vorgeschlagen worden.

Die DE 101 59 801 A1 betrifft beispielsweise einen Verbrennungsmotor mit mindestens einem Aufladegerät, welches vom Abgasstrom des Verbrennungsmotors angetrieben wird, und mit einer nach dem Miller-Verfahren verstellbaren Nockenwelle. Seriell oder parallel zum Aufladegerät ist eine weitere Verdichterstufe angeordnet, die nicht vom Abgasstrom des Verbrennungsmotors angetrieben wird. Bei niedrigen Drehzahlen des Verbrennungsmotors wird der Ladedruck durch Aktivieren der weiteren Verdichterstufe erhöht. Die weitere Verdichterstufe, welche nicht vom Abgasstrom des Verbrennungsmotor angetrieben wird, kann beispielsweise elektrisch angetrieben werden. Eine derartig elektrisch angetriebene Verdichterstufe wird auch als elektrischer Booster bezeichnet.

Das Miller-Verfahren ist aus der US 2,670,595 bekannt. Eine Darstellung des Miller-Verfahrens ist auch dem Artikel "Miller- und Atkinson-Zyklus am aufgeladenen Dieselmotor" von E. Schutting et al. in MTZ Motortechnische Zeitschrift, 2007, Heft 06, Seiten 480 bis 485, zu entnehmen. Gemäß dem Miller-Verfahren wird nach dem Ausstoßtakt das Einlassventil geöffnet, um dem Zylinder Luft zuzuführen. Das Einlassventil wird geschlossen, bevor der Kolben den unteren Totpunkt des Einlasstakts erreicht.

Die EP 2 041 414 B1 betrifft ein Verfahren zum Betrieb eines Ottomotors, bei dem mindestens ein Einlassventil des Ottomotors sehr früh oder sehr spät geschlossen wird, und bei dem ein dem Ottomotor zugeführter Verbrennungsluftstrom mit einem Lader verdichtet wird. Zumindest bei Volllast wird dem Verbrennungsluftstrom ein Teilstrom von rückgeführtem Abgas als Abgasrückführung zugeführt und der Ottomotor mit einem geometrischen Verdichtungsverhältnis größer als 1:10 betrieben.

Die DE 102 33 256 A1 betrifft ein Verfahren zur Zündung des Kraftstoff-Luft-Gemischs bei einem Ottomotor mit Kraftstoff-Direkteinspritzung mit einer Vorkammer und Funkenzündung in der Vorkammer. Die Vorkammer steht mit einer kleinen Kolbenmulde in Wirkverbindung.

Die Dokumente EP 1 688 601 A2, US 2004/221820 A1 und US 2004/103648 A1 beschreiben jeweils einen Dieselmotor, der nach dem Miller-Prinzip funktioniert und einen Turbolader aufweist. Der in den Dokumenten beschriebene motorische Prozess ist ein Kreisprozess eines Dieselmotors. Es handelt sich dabei um ein selbstzündendes Brennverfahren (HCCI), das für Dieselmotoren charakteristisch ist.

Die US 2009/120418 A1 betrifft eine Brennkraftmaschine mit einer Kühleinrichtung, die zum Kühlen des rückgeführten Abgases geeignet ist, wobei die Kühleinrichtung den Abgaskrümmer kühlt und der Abgasrückführpfad aus dem gekühlten Abgaskrümmer abzweigt.

Die Dokumente, US 2010/199666 A1, US 4,010,613 A, und US 4,214,443 A beschreiben verschiedene Maßnahmen zur Kühlung der Abgase, indem eine besondere Ausführung von Wärmetauschern oder von Turbinen offenbart ist oder eine Anordnung zur Kühlung der Ansaugluft, um Emissionen zu vermindern.

Ottomotoren sind in ihrem thermodynamischen Wirkungsgrad auf Grund der notwendigen Drosselung der quantitativen Laststeuerung sowie des reduzierten Verdichtungsverhältnisses zur Vermeidung von Motorklopfen begrenzt. Ein Ansatz zur Entdrosselung im Teillastbetrieb und zur möglichen Erhöhung des geometrischen Verdichtungsverhältnisses stellt das zuvor genannte Miller-Verfahren und das aus dem Stand der Technik bekannte Atkinson-Verfahren dar. Hier werden über ein frühes bzw. spätes Schließen des Einlassventils der Luftaufwand und die effektive Verdichtung reduziert. Der Luftaufwand beschreibt die Ladungswechselgüte und gibt das Verhältnis zwischen tatsächlicher Luftmenge, welche während des Einlasstaktes dem Zylinder zugeführt wurde, zu der theoretisch maximalen Luftmenge an. Dadurch wird der Motor entdrosselt, sowie die Verdichtungsendtemperatur und damit die Klopfneigung reduziert. Weiterhin kann die geometrische Verdichtung erhöht werden. Die in dem Stand der Technik bekannten Miller / Atkinson-Verfahren weisen jedoch einen deutlichen Leistungsverlust auf.

Aufgabe der vorliegenden Erfindung ist es daher, den Wirkungsgrad eines Ottomotors zu steigern ohne die Leistung des Motors zu verringern.

Diese Aufgabe wird durch ein Verfahren zum Betreiben eines Antriebsaggregats mit einem Ottomotor gemäß Anspruch 1 beziehungsweise durch ein Antriebsaggregat mit einem Ottomotor gemäß Anspruch 10 gelöst. Die abhängigen Ansprüche definieren bevorzugte und vorteilhafte Ausführungsformen und/oder Weiterbildungen der Erfindung.

Gemäß der vorliegenden Erfindung wird ein Verfahren zum Betreiben eines Antriebsaggregats mit einem Ottomotor und einer Abgaskühlung bereitgestellt. Der Ottomotor ist in bevorzugter Ausführungsform ein hochverdichtender Ottomotor. Die bevorzugte Ausführungsform kann auch als hochaufgeladener oder hochverdichteter Ottomotor bezeichnet werden. Bevorzugt wird die zugeführte Verbrennungsluft im Zylinder des Ottomotors mit einem geometrischen Verdichtungsverhältnis größer als 1:10 und kleiner als 1:20 verdichtet. Der Ottomotor ist insbesondere ein direkteinspritzender Ottomotor. Mit anderen Worten, in bevorzugter Ausführungsform wird der Kraftstoff direkt in den Zylinder eingespritzt.

Bei dem erfindungsgemäßen Verfahren wird Verbrennungsluft, welche einem Zylinder des Ottomotors durch ein Einlassventil zugeführt wird, mit einem Abgasturbolader mit einer Turbine, die eine variable Turbinengeometrie aufweist, verdichtet. Die der Turbine zugeführten Abgase werden in einem Teil der Abgasleitung, insbesondere zwischen einem Auslassventil des Ottomotors und der Turbine des Abgasturboladers, erfindungsgemäß gekühlt. Bevorzugt werden die Abgase in einem Abgaskrümmer gekühlt. Dieser ist besonders vorteilhaft in einem Zylinderkopf des Ottomotors integriert.

Das Einlassventil wird geschlossen, bevor ein Kolben in dem Zylinder einen unteren Totpunkt des Zylinders erreicht. Der Abgasturbolader umfasst bevorzugt ein Turbinenrad und ein Verdichterrad, die auf einer Welle miteinander verbunden sind. Das Turbinenrad wird von einem Abgasstrom des Ottomotors angetrieben. Das Verdichterrad ist in einer Verbrennungsluftzufuhr des Ottomotors angeordnet und verdichtet, angetrieben von dem über die Welle gekoppelten Turbinenrad, die Verbrennungsluft, welche den Zylindern des Ottomotors zugeführt wird. Ein effektiver Strömungsquerschnitt im Turbineneintritt ist veränderlich ausgestaltet. Dazu können beispielsweise in einem Turbinengehäuse des Abgasturboladers, in welchem das Turbinenrad angeordnet ist, verstellbare Leitschaufeln angeordnet sein. Durch Verstellen der Einstellung der Leitschaufeln kann die Drehzahl des Turbinenrads bei gleichem Abgasstrom verändert werden, wodurch die von dem Verdichterrad erzeugte Verdichtung, der sogenannte Ladedruck verändert werden kann. Alternativ kann der effektive Strömungsquerschnitt mit beispielsweise einer Schiebehülse variiert werden. Der Abgasturbolader mit variabler Turbinengeometrie weist bevorzugt eine Radialturbine und einen Radialverdichter auf. Im Turbinenradeintritt kann eine Leitschaufelmimik vorgesehen sein, die über einen elektrischen Steller verstellt wird. Dabei kann durch Verdrehen der Leitschaufeln der effektive Strömungsquerschnitt vor dem Turbinenrad variiert werden.

Durch das frühe Schließen des Einlassventils, bevor der Kolben den unteren Totpunkt erreicht, kann ein Verdichtungsverhältnis des Ottomotors erhöht werden, ohne dass ein Motorklopfen auftritt. Durch die Variabilität des Strömungsquerschnitts im Turbineneintritt wird ein nutzbares Turbinenkennfeld breiter Die Ansteuerung des Turbine erfolgt insbesondere in Abhängigkeit des benötigten Ladedruckes. Mit zunehmender Motorlast wird ein höherer Ladedruck benötigt. Um diesen zu erzeugen wird der Strömungsquerschnitt an der Turbine reduziert, um eine erhöhte Turbinenleistung zu erzeugen. Dabei wird, in Abgrenzung zu einer dieselmotorischen Anwendung, der minimale Turbinenströmungsquerschnitt durch ein maximal zulässigen Abgasgegendruck begrenzt. Damit unterscheidet sich die Ansteuerung auch von derjenigen für Abgasturbolader mit Nebenstromregelung (Waste-Gate), da hier eine derartige Begrenzung prinzipbedingt nicht notwendig ist.

Die Verwendung einer Abgasturbine mit variabler Turbinengeometrie führt damit zu einem breiter nutzbaren Verdichterkennfeld, so dass bereits bei mittleren Lasten des Ottomotors ein ausreichender Ladedruck erzeugt werden kann, um Füllungsverluste, welche durch das frühe Schließen des Einlassventils entstehen können, auszugleichen. Daher kann insbesondere in diesen Betriebsbereichen eine erhebliche Steigerung des thermodynamischen Gesamtwirkungsgrads erreicht werden. Durch das frühe Schließen des Einlassventils erfolgt im Zylinder im Einlasstakt eine zusätzliche Abkühlung der Verbrennungsluft durch Expansion. Dies resultiert in einer reduzierten Kompressionsarbeit sowie in einer reduzierten Prozesstemperatur, welche die Klopfneigung und Wandwärmeverluste reduziert.

Darüber hinaus kann beim erfindungsgemäßen Vorgehen eine Abgastemperatur verringert werden, wodurch eine thermische Auslegung des Abgasturboladers auf für Ottomotoren niedrige Abgastemperaturen, beispielsweise von maximal 850° Celsius, ermöglicht wird. Dadurch ist eine Materialauswahl sowie eine Spaltmaßauslegung des Abgasturboladers für den Ottomotor analog zu heutigen Dieselmotoren möglich, wodurch Kosten für den Abgasturbolader mit variabler Turbinengeometrie verringert werden können. Durch die reduzierte Spaltmaßauslegung kann darüber hinaus der Turbinenwirkungsgrad erhöht werden. Somit kann gemäß dem vorliegenden Verfahren verglichen mit einem gemäß dem Miller-Brennverfahren betriebenen Ottomotor mit einem Abgasturbolader mit fester Turbinengeometrie eine leistungsneutrale Wirkungsgradsteigerung erreicht werden.

Gemäß einer Ausführungsform wird die variable Turbinengeometrie des Abgasturboladers in Abhängigkeit einer Last des Ottomotors eingestellt. Der durch das frühe Schließen des Einlassventils einhergehende Füllungsverlust kann durch eine Einstellung der variablen Turbinengeometrie durch das breitere Verdichterkennfeld des Abgasturboladers mit variabler Turbinengeometrie in allen Lastbereichen des Ottomotors geeignet ausgeglichen werden. Darüber hinaus können insbesondere im Volllastbetrieb die Prozesstemperatur und die Abgastemperatur verringert werden, wodurch der Wirkungsgrad des Ottomotors gesteigert wird, und kostengünstigere Materialien im Abgasstrang und in der Turbine des Abgasturboladers verwendet werden können.

Gemäß einer weiteren Ausführungsform wird die dem Zylinder zugeführte Verbrennungsluft zusätzlich mit einem elektrisch angetriebenen Verdichter, einem sogenannten elektrischen Booster oder e-Booster, verdichtet. Durch das frühe Schließen des Einlassventils, bevor der Kolben in dem Zylinder den unteren Totpunkt erreicht, wird der Luftaufwand verringert, d.h. das Verhältnis von tatsächlicher Luftmenge, welche dem Zylinder zugeführt wird, zu der theoretisch maximalen Luftmenge in dem Zylinder wird verringert. Auf Grund des reduzierten Luftaufwandes kann sich die Ansprechzeit des Ottomotors, insbesondere auf eine Anforderung zur Erhöhung der Drehzahl oder des Moments, erhöhen. Mit Hilfe des elektrisch angetriebenen Verdichters kann die Ansprechzeit des Ottomotors verringert werden, indem die Verbrennungsluft mit dem elektrisch angetriebenen Verdichter vorverdichtet wird und somit der Abgasturbolader beschleunigt wird. Der elektrische Antrieb des Verdichters hat beispielsweise eine Leistungsaufnahme von unter 1 KW und ist damit mit einem üblicherweise in einem Fahrzeug vorhandenen 12 V-Netz betreibbar. Weiterhin ermöglicht die Kombination aus Abgasturbolader mit variabler Turbinengeometrie und elektrisch angetriebenem Verdichter, das der elektrisch angetriebene Verdichter nur kurzzeitig zur Verbesserung der Ansprechzeit des Ottomotors betrieben wird und daher keine Maßnahmen zur Erhöhung der elektrischen Leistungsfähigkeit des elektrischen Netzes des Fahrzeugs erforderlich sind.

Durch die in einer Gruppe von Ausführungsformen vorgesehenen Kombination eines Abgasturboladers mit einem mechanisch über die Kurbelwelle angetriebenen Verdichter kann ein sehr breites Verdichterkennfeld erreicht werden. Dadurch kann ein Füllungsverlust, welcher durch das frühe Schließen des Einlassventils hervorgerufen wird, in weiten Drehzahl- und Lastbereichen des Ottomotors ausgeglichen werden. Somit kann wiederum eine leistungsneutrale Wirkungsgradsteigerung des Ottomotors über einen weiteren Lastbereich des Ottomotors erreicht werden.

Gemäß einer Weiterentwicklung der Erfindung kann ein Nebenschlussventil des Abgasturboladers in Abhängigkeit einer Last des Ottomotors eingestellt werden. Das Nebenschlussventil leitet einen eingestellten Anteil von Abgasen des Ottomotors an einer Turbine des Abgasturboladers vorbei. Ein derartiges Nebenschlussventil wird auch als Waste-Gate oder Bypass-Ventil bezeichnet. Mit Hilfe des Nebenschlussventils kann insbesondere bei hohen Drehzahlen des Ottomotors ein breites Verdichterkennfeld auch im Volllastbereich bereitgestellt werden, wodurch ein Ausgleich der Füllungsverluste geeignet eingestellt werden kann.

Gemäß einer anderen besonders vorteilhaften Weiterentwicklung umfasst der Ottomotor eine Abgasrückführung, wobei Abgase, welche über die Abgasrückführung geleitet werden, gekühlt werden. Die Abgasrückführung kann beispielsweise eine sogenannte Hochdruckabgasrückführung und/oder eine sogenannte Niederdruckabgasrückführung umfassen. Die Hochdruckabgasrückführung koppelt eine Abgasführung zwischen den Auslassventilen des Ottomotors und der Turbine des Abgasturboladers mit einer Verbrennungsluftzuführung zwischen dem Verdichter und den Einlässventilen. Die Niederdruckabgasrückführung koppelt eine Abgasführung hinter der Turbine des Abgasturboladers mit einer Verbrennungsluftzuführung vor dem Verdichter. Durch die Kühlung der Abgasrückführung kann die dem Ottomotor zugeführte Verbrennungsluft gekühlt werden und somit die Prozesstemperatur verringert werden. Die Abgasrückführung kann beispielsweise mittels des Motorkühlmittels durch Verwendung beispielsweise eines integrierten Abgaskrümmers durchgeführt werden. Insbesondere kann die Abgaskühlung für die rückgeführten Abgase dieselbe sein, welche auf die der Turbine des Abgasturboladers zugeführten Abgase wirkt.

Der Wirkungsgradvorteil entsteht hauptsächlich hin zu steigender Motorleistung. Hier müssen heutige ottomotorische Konzepte durch zusätzlich Kraftstoffzuführung im Zylinder die Prozesstemperatur senken, um die abgasführenden Bauteil vor zu hoher thermischer Belastung zu schützen. Dies resultiert in der Regel in einem hohen Mehrverbrauch an Kraftstoff. Durch die Verwendung des integrierten Abgaskrümmers kann diese Maßnahme deutlich reduziert werden und damit zu hoher Motorleistung hin der Wirkungsgrad des Motors um einige Prozentpunkte erhöht werden. Im Vergleich zu der Verwendung von herkömmlichen Abgasrückführungssystemen kann damit die Abgastemperatur mittels integrierten Abgaskrümmers deutlich reduziert werden.

Des Weiteren kann das Einlassventil in einem Bereich von 35° bis 90° Kurbelwellenwinkel des Ottomotors vor dem unteren Totpunkt zwischen Einlasstakt und Verdichtungstakt geschlossen werden. Das Einlassventil kann insbesondere in einem Bereich von 50° bis 70° Kurbelwellenwinkel des Ottomotors vor dem unteren Totpunkt geschlossen werden. Das Schließen des Einlassventils ist dabei auf einen Millimeter Ventilhub bezogen, d.h. das Einlassventil wird in dem oben genannten Kurbelwellenwinkelbereich soweit geschlossen, dass ein verbleibender Ventilhub kleiner oder gleich einem Millimeter ist. Durch das frühe Schließen des Einlassventils wird die bis dahin zugeführte Verbrennungsluft im weiteren Verlauf des Einlasstakts expandiert, wodurch sich die Verbrennungsluft abkühlt. Dies führt zu einer reduzierten Kompressionsarbeit im nachfolgenden Kompressionstakt, sowie zu einer verringerten Prozesstemperatur, wodurch eine Klopfneigung des Ottomotors und Wandwärmeverluste verringert werden können. Gleichzeitig steht für den Arbeitstakt das volle Expansionsverhältnis zur Verfügung.

Gemäß einer weiteren Ausführungsform umfasst der Ottomotor eine variable Ventilsteuerung. Ein Winkel, bei dem das Einlassventil schließt, wird in Abhängigkeit einer Last des Ottomotors mittels der variablen Ventilsteuerung eingestellt. Durch das Einstellen des Winkels, bei dem das Einlassventil schließt, kann der Luftaufwand lastabhängig eingestellt werden, so dass eine drosselfreie Regelung der Motorlast ermöglicht wird, welche eine leistungsneutrale Wirkungsgradsteigerung ermöglicht.

Des Weiteren oder alternativ dazu werden Abgase zwischen einem Auslassventil des Ottomotors und dem Abgasturbolader durch Kühlen eines Abgaskrümmers des Ottomotors gekühlt. Durch das Kühlen der Abgase vor dem Abgasturbolader ist eine thermische Auslegung des Abgasturboladers auf geringere Abgastemperaturen möglich, wodurch eine kostengünstigere Materialwahl sowie eine reduzierte Spaltmaßauslegung ermöglicht wird.

Gemäß der vorliegenden Erfindung wird weiterhin ein Antriebsaggregat mit einem Ottomotor bereitgestellt. Das Antriebsaggregat umfasst einen Abgasturbolader mit einer Turbine, die eine variable Turbinengeometrie aufweist, und eine Ventilsteuerung. Der Abgasturbolader ist zum Verdichten einer einem Zylinder des Ottomotors durch ein Einlassventil zugeführten Verbrennungsluft ausgestaltet. Die Ventilsteuerung ist ausgestaltet, das Einlassventil zu schließen, bevor ein Kolben in dem Zylinder einen unteren Totpunkt, insbesondere zwischen einem Einlasstakt und einem Kompressionstakt, erreicht. Der Ottomotor ist somit insbesondere zur Durchführung des zuvor beschriebenen Verfahrens mit einem oder mehreren der beschriebenen Merkmale geeignet und umfasst daher auch die zuvor beschriebenen Vorteile. Insbesondere ermöglicht der Ottomotor eine Steigerung des Wirkungsgrades gegenüber herkömmlichen Ottomotoren, wobei eine Leistung des Ottomotors durch die Wirkungsgradsteigerung nicht verringert wird.

Erfindungsgemäß weist das Antriebsaggregat einen Abgaskühler, welcher einem Teil einer Abgasleitung zugeordnet ist, zur Kühlung des in dem Teil der Abgasleitung der Turbine zugeführten Abgases auf. In einer Gruppe von Ausführungsformen ist der Teil der Abgasleitung ein Abgaskrümmer. Dieser ist bevorzugt in vorteilhafter Weise in einem Zylinderkopf des Ottomotors teilweise oder (besonders bevorzugt) vollständig integriert.

Beim integrierten Abgaskrümmer wird der üblicherweise separat ausgeführte Abgaskrümmer in den Zylinderkopf vollständig integriert und damit verbleibt nach dem Austritt aus dem Zylinderkopf eine einzige Rohrverbindung zur Turbine. Um die Bauteiltemperatur nicht unzulässig hoch werden zu lassen, wird die gasführende Kontur kühlumspült ausgeführt. Dabei kann dieser Kühlmittelmantel auch durch mehrteilige Gießkerne dargestellt werden. Das Kühlmittel kann insbesondere Wasser sein.

Die erfindungsgemäßen Antriebsaggregate können einen Ottomotor mit einem geometrischen Verdichtungsverhältnis im Bereich von 1:10 bis 1:20, bevorzugt 1:12 bis 1:15, insbesondere 1:13, aufweisen. Derartig große Verdichtungsverhältnisse sind möglich, da mittels des frühen Schließens des Einlassventils ein Luftaufwand von <1 eingestellt wird und dadurch eine Klopfneigung des Ottomotors verhindert werden kann. Der Luftaufwand wird beispielsweise auf einen Bereich von 0,5 bis 0,9, vorzugsweise auf einen Bereich von 0,6 bis 0,8 eingestellt.

Gemäß der vorliegenden Erfindung wird schließlich ein Fahrzeug, insbesondere ein schienenloses Landfahrzeug, mit einem der beschriebenen Antriebsaggregate mit Ottomotor bereitgestellt. Durch den verbesserten Wirkungsgrad des Ottomotors können ein Verbrauch und Emissionen des Fahrzeugs, insbesondere CO₂-Emissionen verringert werden. Da die Wirkungsgradsteigerung, wie es zuvor beschrieben wurde, leistungsneutral durchgeführt werden kann, ergeben sich für einen Benutzer des Fahrzeugs keinerlei Leistungseinbußen im Betrieb des Fahrzeugs.

Bevorzugte Ausführungsformen der vorliegenden Erfindung werden nachfolgend unter Bezugnahme auf die Zeichnung im Detail beschrieben.
- Fig. 1: zeigt eine schematische Darstellung eines Antriebsaggregats mit Ottomotor gemäß einer Ausführungsform der vorliegenden Erfindung.
- Fig. 2: zeigt eine weitere schematische Darstellung eines Antriebsaggregats mit Ottomotor gemäß einer weiteren Ausführungsform der vorliegenden Erfindung.
- Fig. 3: zeigt schematisch ein erfindungsgemäßes Fahrzeug mit einer Ausführungsform der Erfindung.

Bei üblichen Ottomotoren ist der thermodynamische Wirkungsgrad auf Grund der notwendigen Drosselung bei der quantitativen Laststeuerung sowie des reduzierten Verdichtungsverhältnisses zur Vermeidung von Motorklopfen begrenzt. Ein Ansatz zur Entdrosselung im Teillastbetrieb und zur möglichen Erhöhung des geometrischen Verdichtungsverhältnisses stellt das sogenannte Miller- oder Atkinson-Verfahren dar. Dabei wird über ein frühes bzw. spätes Schließen des Einlassventils (frühes Einlass schließt, FES; spätes Einlass schließt, SES) der Luftaufwand und die effektive Verdichtung reduziert. Dadurch wird der Motor entdrosselt sowie die Verdichtungsendtemperatur und damit die Klopfneigung reduziert bzw. die geometrische Verdichtung erhöht. Der Luftaufwand, welcher das Verhältnis von tatsächlicher Luftmenge und maximal theoretischer Luftmenge nach dem Einlasstakt angibt, kann durch das Miller-Verfahren von beispielsweise 0,95 auf 0,5-0,9 verringert werden. Auf Grund des verringerten Luftaufwands kann jedoch ein Leistungsverlust auftreten. Um diesen Leistungsverlust zu vermeiden und trotzdem die Wirkungsgradsteigerung durch das Miller-Verfahren zu erreichen, wird gemäß einer Ausführungsform der vorliegenden Erfindung ein Ottomotor mit einem hochverdichteten Miller-Verfahren und einem Abgasturbolader mit variabler Turbinengeometrie vorgeschlagen. Um das hochverdichtete Miller-Verfahren zu erreichen, wird das Einlassventil geschlossen, bevor ein Kolben in einem entsprechenden Zylinder den unteren Totpunkt erreicht. Das Einlassventil kann beispielsweise in einem Winkelbereich von 90° bis 35° Kurbelwellenwinkel vor dem Erreichen des unteren Totpunkts geschlossen werden. Vorzugsweise kann das Einlassventil in einem Bereich von 70° bis 50° Kurbelwellenwinkel vor dem Erreichen des unteren Totpunkts geschlossen werden.

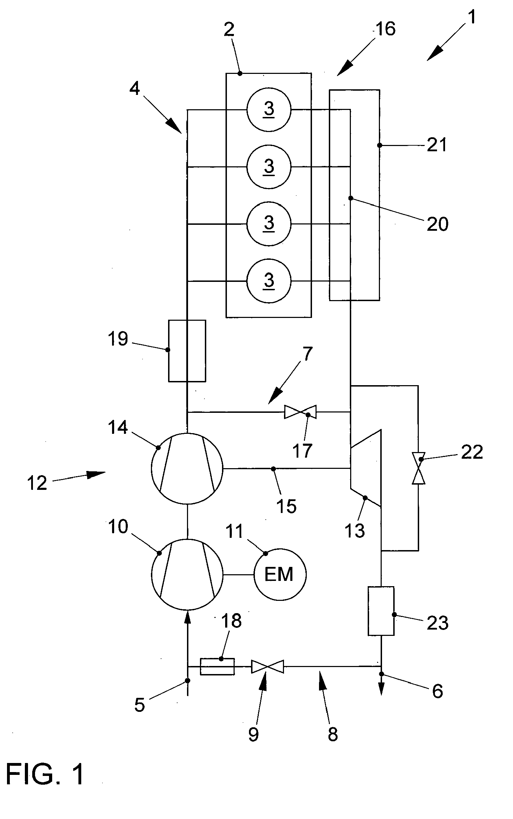

Fig. 1 zeigt eine Ausführungsform eines Antriebsaggregats mit Ottomotor 1. Der Ottomotor 1 umfasst einen Zylinderblock 2 mit vier schematisch angedeuteten Zylindern 3. An einer Einlassseite 4 wird dem Ottomotor 1 Verbrennungsluft über Einlassventile, welche in der Figur nicht dargestellt sind, zugeführt. Die Einlassventile können einen variablen Ventiltrieb umfassen, so dass ein Kurbelwellenwinkel, zu dem ein Einlassventil schließt, veränderlich eingestellt werden kann. Die Ottoluft, welche der Einlassseite 4 zugeführt wird, umfasst Frischluft 5 sowie Verbrennungsabgase 6, welche über Abgasrückführungen 7 und 8 mit der Frischluft 5 gemischt werden. Die Frischluft 5 wird über eine Niederdruckabgasrückführung, 8 mit einem einstellbaren Niederdruckabgasrückführungsventil 9 mit Abgasen 6 gemischt. Zusätzlich wird das über die Niederdruckabgasrückführung 7 geführte Abgas mit einem Kühler 18 gekühlt. Dieses Gemisch wird mit einem elektrisch angetriebenen Verdichter, einem sogenannten e-Booster, verdichtet. Der e-Booster umfasst einen Verdichter 10, welcher von einem Elektromotor 11 angetrieben wird. Über eine (nicht gezeigte) Ansteuerung des Elektromotors 11 kann die von dem Verdichter 10 bewirkte Verdichtung veränderlich eingestellt werden.

Die von dem Verdichter 10 verdichtete Luft wird einem Abgasturbolader 12 mit variabler Turbinengeometrie in dieser Ausführungsform zugeführt. Der Abgasturbolader 12 umfasst eine vom Abgas des Ottomotors 1 angetriebene Turbine 13 und einen Verdichter 14, welche über eine gemeinsame Welle 15 miteinander verbunden sind. Der durch die Verdichter 10 und 14 verdichteten Verbrennungsluft kann über die Hochdruckabgasrückführung 7 weiteres Abgas von einer Abgasseite 16 des Ottomotors 1 zugeführt werden. Zur Einstellung der Abgasrückführung über die Hochdruckabgasrückführung 7 umfasst die Hochdruckabgasrückführung 7 ein Hochdruckabgasrückführungsventil 17. Die somit verdichtete und mit Abgasen gemischte Verbrennungsluft wird der Einlassseite 4 über einen Ladeluftkühler 19 zugeführt. Aus der Abgasseite 16 werden die Abgase der vier Zylinder 3 in einem Abgaskrümmer 20 gesammelt und der Hochdruckabgasrückführung 7 sowie der Turbine 13 mit veränderlicher Geometrie zugeführt. Zur Kühlung der Abgase kann der Abgaskrümmer 20 einen Abgaskühler 21, welcher beispielsweise mit Kühlwasser gekühlt wird, umfassen.

Der Abgasturbolader 12 umfasst weiterhin ein optionales Nebenschlussventil 22, über welches ein einstellbarer Anteil von Abgasen des Ottomotors 1 an der Turbine 13 des Abgasturboladers 12 vorbeigeleitet werden kann. Stromabwärts von der Turbine 13 umfasst der Ottomotor 1 ein Abgasreinigungssystem 23, beispielsweise einen Dreiwegekatalysator. Der Ottomotor 1 umfasst weiterhin eine Benzineinspritzanlage, vorzugsweise eine Benzindirekteinspritzung, welche den Kraftstoff direkt in den Zylinder 3 einspritzt.

Basierend auf dem aufgeladenen Ottomotor 1 mit beispielsweise einer Benzindirekteinspritzung werden Ventiltriebsvariabilitäten hinsichtlich Phase, Steuerbreite und Zylinderabschaltung zur drosselfreien Regelung der Motorlast mittels des Liefergrades eingestellt. Gleichzeitig weist der Zylinderblock 2 des Ottomotors 1 ein erhöhtes geometrisches Verdichtungsverhältnis auf, beispielsweise in einem Bereich von etwa 12-14. Zur Reduzierung der damit einhergehenden erhöhten Klopfneigung im höheren Teillast- und Volllastbetrieb wird der Luftaufwand mittels eines frühen Einlass schließt (FES) auf <1, beispielsweise in einen Bereich von 0,5-0,9 oder vorzugsweise 0,6-0,8 eingestellt. Zudem wird im Ladedruck geführten Betriebszustand gekühltes und konvertiertes Abgas über die Niederdruckabgasrückführung 8 zur Erhöhung der spezifischen Wärmekapazität des Abgases rückgeführt. Wie in Fig. 1 gezeigt wurde, wird mittels der Niederdruckabgasrückführung 8 Abgas nach dem Katalysator 23 entnommen, gefiltert, gekühlt und vor die Verdichter 10 und 14 zurückgeführt. Der damit einhergehende Füllungsverlust wird über eine Erhöhung des Saugrohrdrucks mittels der Verdichter 10 und 14 ausgeglichen. Prinzipiell wird damit ein Teil der Verdichtung des Arbeitsgases an Stelle von im Zylinder durch die Verdichter 10 und 14 verrichtet. Mittels des entsprechend dimensionierten Ladeluftkühlers 19 erfolgt eine Rückkühlung des verdichteten Arbeitsgases, bevor im Zylinder 3 die restliche Verdichtung erfolgt. Auf Grund des FES erfolgt im Zylinder 3 im Einlass- bzw. Ansaugtakt eine zusätzliche Abkühlung des Arbeitsgases durch Expansion. Dies führt zu einer reduzierten Kompressionsarbeit sowie zu einer reduzierten Prozesstemperatur, welche die Klopfneigung und die Wandwärmeverluste im Zylinderblock 2 reduziert. Gleichzeitig steht für den Arbeitstakt das volle Expansionsverhältnis des geometrischen Verdichtungsverhältnisses zur Verfügung. Der erhöhte Kühlleistungsbedarf für die Ladeluftkühlung und die Abgasrückführungskühlung wird durch einen reduzierten Wärmeeintrag in das Motorkühlmittel zum großen Teil kompensiert.

Zum Aufladen des Ottomotors 1 wird ein Abgasturbolader 12 mit variabler Turbinengeometrie in Kombination mit einem e-Booster 10,11 verwendet. Im Gegensatz zu einem üblichen Abgasturbolader mit einem Nebenschlussventil 22 kann über die variable Turbinengeometrie der Turbine 13 und die damit verbundene variable Turbinenkennfeldbreite bereits bei mittleren Lasten ausreichend Ladedruck erzeugt werden, um die zuvor genannten verfahrensbedingten Füllungsverluste auszugleichen. Darüber hinaus kann der gesamte Massenstrom des Abgases über die Turbine geleitet werden, wodurch mehr Turbinenleistung im Volllastbereich zur Verfügung steht. Daher resultiert insbesondere in zyklusrelevanten Betriebsbereichen eine erhebliche Steigerung des thermodynamischen Gesamtwirkungsgrades. Durch die verringerte Prozesstemperatur und eine vorteilhafte, bevorzugte Kühlung 21 des Abgaskrümmers 20 kann der Abgasturbolader 12 thermisch auf für Ottobrennverfahren niedrige Abgastemperaturen, beispielsweise von maximal 850°, ausgelegt werden. Dadurch ist eine kostengünstigere Materialwahl und Spaltmaßauslegung verglichen mit üblichen Abgasturboladerkonzepten mit variabler Turbinengeometrie für Ottomotoren möglich. Durch die Materialwahl können die Kosten des Abgasturboladers verringert werden und durch die verringerte Spaltmaßauslegung können höhere Turbinenwirkungsgrade im Vergleich zu üblichen Abgasturboladern für Ottomotoren erreicht werden.

Zusammenfassend resultiert der zuvor beschriebene Arbeitsprozess auf Grund der reduzierten Prozesstemperatur durch die gekühlte Vorverdichtung, innere Expansion bei frühem Einlass schließt (FES), gekühlter Abgasrückführung, dem erhöhten geometrischen Verdichtungsverhältnis und der damit einhergehenden verlängerten Expansion zu einer reduzierten Abgastemperatur beim Öffnen des Auslassventils. Die Kombination aus dem zuvor beschriebenen Arbeitsverfahren (hochverdichtetes Miller-Verfahren) und dem Abgasturbolader mit variabler Turbinengeometrie ist somit entscheidend für eine leistungsneutrale Wirkungsgradsteigerung mittels des hochverdichteten Miller-Verfahrens und für ausreichend geringe Abgastemperaturen, die einen wirtschaftlich und technologisch vertretbaren Aufwand für den Einsatz eines Abgasturboladers mit variabler Turbinengeometrie ermöglichen.

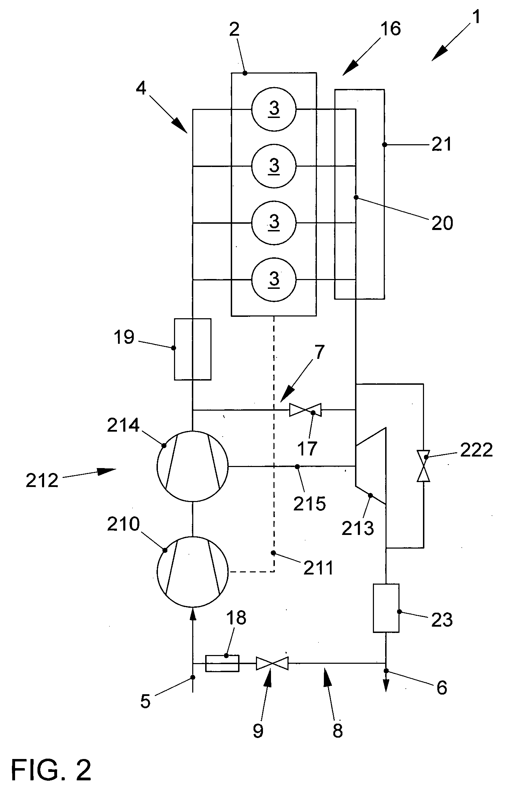

Fig. 2 zeigt eine weitere Ausführungsform eines Ottomotors 1, welche beispielsweise für höhere Literleistung geeignet ist. Das Antriebsaggregat mit dem Ottomotor 1 in der Fig. 2 kann anstatt des Turboladers 12 mit variabler Turbinengeometrie einen Abgasturbolader 212 mit fester Turbinengeometrie aufweisen. Das heißt, der Abgasturbolader 212 umfasst eine Turbine 213 mit fester Turbinengeometrie. Zusätzlich umfasst der Abgasturbolader 212 ein Nebenschlussventil 222, welches auch als Bypass-Ventil oder Waste-Gate bezeichnet wird. Alternativ dazu kann das Antriebsaggregat einen Abgasturbolader 212, welcher über eine Welle 215 mit einem Verdichter 214 gekoppelt ist, mit variabler Turbinengeometrie aufweisen. Im Unterschied zu der in Fig. 1 gezeigten Ausführungsform umfasst der Ottomotor 1 der Fig. 2 statt des e-Booster 10,11 einen mechanisch angetriebenen Verdichter 210, welcher über einen Antrieb 211 mit einer Kurbelwelle des Ottomotors 1 gekoppelt ist und über die Kurbelwelle angetrieben wird. Ein derartiges Konzept aus mechanisch angetriebenem Verdichter 210 und Abgasturbolader 212 wird auch als Twin-Charger-Konzept bezeichnet. Die übrigen Komponenten des Ottomotors 1 der Fig. 2 entsprechen den Komponenten des Ottomotors 1 der Fig. 1. Ein Einlassventil des Ottomotors 1 wird geschlossen, bevor der entsprechende Kolben den unteren Totpunkt erreicht. Der Ottomotor 1 der Fig. 2 arbeitet somit auch gemäß dem Miller-Verfahren.

Die zuvor in Zusammenhang mit Fig. 1 beschriebene Reduzierung der Abgastemperatur bei reduziertem Luftaufwand im Vergleich zu üblichen Ottomotoren resultiert in einer reduzierten Abgasenthalpie, welche dem Abgasturbolader für transiente Betriebszustände, wie z.B. eine spontane Lastanforderung zur Verfügung steht. Bei heute üblichen ottomotorischen Konzepten erfolgt eine Abgasenthalpieerhöhung durch eine Spätverstellung des Zündwinkels und damit der Verbrennung. Dies führt zu Wirkungsgradeinbußen im transienten Motorbetrieb. Zur Verbesserung der auf Grund des reduzierten Luftaufwands eintretenden Erhöhung der Ansprechzeit des Ottomotors wird ein Vorverdichter, beispielsweise der in Fig. 1 gezeigte e-Booster 10,11 oder der in Fig. 2 gezeigte mechanisch angetriebene Verdichter 210, in das Aufladesystem integriert. Der Vorverdichter wird nach dem Luftfilter in der Ansaugstrecke vor dem Hauptverdichter 14 bzw. 214 positioniert. Durch Erzeugen von Druckverhältnissen von weniger als 1,5 hPa wird der Abgasturbolader 12 bzw. 212 beschleunigt und erreicht so die gewünschten Ansprechzeiten. Bei kleineren Motoren reicht eine Antriebsleistung des e-Boosters 10,11 im Bereich von weniger als 1000 Watt aus, d.h., die elektrische Maschine 11 kann zumindest kurzzeitig mit elektrischer Energie des vorhandenen 12 Volt Bord-Netzes betrieben werden. Bei größeren Motoren reicht die elektrische Leistung eines 12V Bord-Netzes häufig nicht aus. In diesen Fällen ist der mechanisch angetriebene Vorverdichter 210 vorteilhaft, welcher von der Kurbelwelle des Ottomotor 1 mechanisch angetrieben wird.

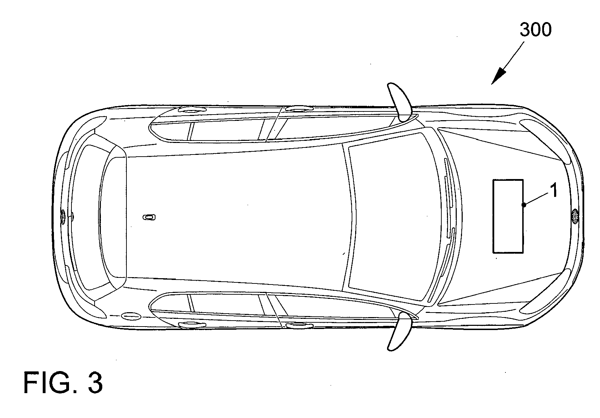

Fig. 3 zeigt schließlich ein Fahrzeug 300 gemäß einer Ausführungsform der vorliegenden Erfindung, welches das zuvor beschriebene Antriebsaggregat mit dem Ottomotor 1 umfasst.

## Patentansprüche

1. Verfahren zum Betreiben eines Antriebsaggregates mit einem Ottomotor (1), umfassend:
- Verdichten einer einem Zylinder (3) des Ottomotors (1) durch ein Einlassventil zugeführten Verbrennungsluft mit einem Abgasturbolader (12), und
- Schließen des Einlassventils, bevor ein Kolben in dem Zylinder (3) einen unteren Totpunkt erreicht,
**gekennzeichnet durch**
- Verwendung eines Abgasturboladers (12) mit einer Turbine (13), die eine variable Turbinengeometrie aufweist, und
- Kühlen des der Turbine (13) zugeführten Abgases in einem Teil einer Abgasleitung mittels eines Abgaskühlers (21).

2. Verfahren nach Anspruch 1,
**dadurch gekennzeichnet,**
**dass** das Abgas in einem Abgaskrümmer (20) gekühlt wird.

3. Verfahren nach Anspruch 1 oder 2,
**dadurch gekennzeichnet,**
**dass** zur Kühlung des Abgases ein Abgaskrümmer (20) verwendet wird, der in einem Zylinderkopf des Ottomotors (1) integriert ist.

4. Verfahren nach einem der vorhergehenden Ansprüche,
**gekennzeichnet durch**
Einstellen der variablen Turbinengeometrie des Abgasturboladers (12) in Abhängigkeit einer Last des Ottomotors (1).

5. Verfahren nach einem der vorhergehenden Ansprüche,
**dadurch gekennzeichnet,**
**dass** die dem Zylinder zugeführte Verbrennungsluft (5) zusätzlich mit einem elektrisch angetriebenen Verdichter (10) verdichtet wird.

6. Verfahren nach einem der vorhergehenden Ansprüche,
**dadurch gekennzeichnet,**
**dass** das Einlassventil in einem Bereich von 35° bis 90° Kurbelwellenwinkel des Ottomotors (1) vor dem unteren Totpunkt geschlossen wird.

7. Verfahren nach einem der vorhergehenden Ansprüche,
**dadurch gekennzeichnet,**
**dass** der Ottomotor (1) eine variable Ventilsteuerung umfasst, wobei ein Winkel, bei dem das Einlassventil schließt, in Abhängigkeit einer Last des Ottomotors (1) eingestellt wird.

8. Verfahren nach einem der vorhergehenden Ansprüche,
**dadurch gekennzeichnet,**
**dass** Kraftstoff direkt in den Zylinder (3) eingespritzt wird.

9. Verfahren nach einem der vorhergehenden Ansprüche,
**dadurch gekennzeichnet,**
**dass** die zugeführte Verbrennungsluft im Zylinder (3) des Ottomotors (1) mit einem geometrischen Verdichtungsverhältnis größer als 1:10 und kleiner als 1:20 verdichtet wird.

10. Antriebsaggregat, insbesondere zur Durchführung des Verfahrens nach einem der vorhergehenden Ansprüche, umfassend:
- einen Ottomotor,
- einen Abgasturbolader (12) zum Verdichten einer einem Zylinder (3) des Ottomotors (1) durch ein Einlassventil zugeführten Verbrennungsluft, und
- eine Ventilsteuerung, welche ausgestaltet ist, das Einlassventil zu schließen, bevor ein Kolben in dem Zylinder (3) einen unteren Totpunkt erreicht,
**dadurch gekennzeichnet, dass**
- ein Abgasturbolader mit einer Turbine (13), die eine variable Turbinengeometrie aufweist, und
- ein Abgaskühler (21), welcher einem Teil einer Abgasleitung zugeordnet ist, zur Kühlung des in dem Teil der Abgasleitung der Turbine (13) zugeführten Abgases verwendet wird.

11. Antriebsaggregat nach Anspruch 10,
**dadurch gekennzeichnet,**
**dass** der Teil der Abgasleitung ein Abgaskrümmer (20) ist.

12. Antriebsaggregat nach Anspruch 11,
**dadurch gekennzeichnet,**
**dass** der der Abgaskrümmer (20) in einem Zylinderkopf des Ottomotors (1) integriert ist.

13. Antriebsaggregat nach einem der vorstehenden Ansprüche 10 bis 12,
**dadurch gekennzeichnet,**
**dass** der Ottomotor (1) ein geometrisches Verdichtungsverhältnis größer als 1:10 und kleiner als 1:20 aufweist.

14. Antriebsaggregat nach Anspruch 13,
**dadurch gekennzeichnet,**
**dass** der Ottomotor (1) ein geometrisches Verdichtungsverhältnis größer als 1:12 und kleiner als 1:15 aufweist.

15. Fahrzeug (300) mit einem Antriebsaggregat nach einem der Ansprüche 10 bis 14.

## Claims

1. Method for operating a drive assembly having an Otto-cycle engine (1), comprising:
- compressing combustion air, which is supplied to a cylinder (3) of the Otto-cycle engine (1) through an inlet valve, by way of an exhaust-gas turbocharger (12), and
- closing the inlet valve before a piston in the cylinder (3) reaches a bottom dead centre,
**characterized by**
- using an exhaust-gas turbocharger (12) with a turbine (13) which has a variable turbine geometry, and
- cooling, in a part of an exhaust line and by way of an exhaust-gas cooler (21), the exhaust gas which is supplied to the turbine (13).

2. Method according to Claim 1,
**characterized**
**in that** the exhaust gas is cooled in an exhaust manifold (20).

3. Method according to Claim 1 or 2,
**characterized**
**in that**, for the cooling of the exhaust gas, use is made of an exhaust manifold (20) which is integrated in a cylinder head of the Otto-cycle engine (1).

4. Method according to one of the preceding claims,
**characterized by**
adjusting the variable turbine geometry of the exhaust-gas turbocharger (12) in a manner dependent on a load of the Otto-cycle engine (1).

5. Method according to one of the preceding claims,
**characterized**
**in that** the combustion air (5) that is supplied to the cylinder is additionally compressed by way of an electrically driven compressor (10).

6. Method according to one of the preceding claims,
**characterized**
**in that** the inlet valve is closed in a range from 35° to 90° crankshaft angle of the Otto-cycle engine (1) before the bottom dead centre.

7. Method according to one of the preceding claims,
**characterized**
**in that** the Otto-cycle engine (1) comprises a variable valve control arrangement, wherein an angle at which the inlet valve closes is adjusted in a manner dependent on a load of the Otto-cycle engine (1).

8. Method according to one of the preceding claims,
**characterized**
**in that** fuel is injected directly into the cylinder (3).

9. Method according to one of the preceding claims,
**characterized**
**in that** the supplied combustion air is compressed in the cylinder (3) of the Otto-cycle engine (1) with a geometric compression ratio of greater than 1:10 and less than 1:20.

10. Drive assembly, in particular for carrying out the method according to one of the preceding claims, comprising:
- an Otto-cycle engine,
- an exhaust-gas turbocharger (12) for compressing combustion air supplied to a cylinder (3) of the Otto-cycle engine (1) through an inlet valve, and
- a valve control arrangement which is designed to close the inlet valve before a piston in the cylinder (3) reaches a bottom dead centre,
**characterized in that**
- use is made of an exhaust-gas turbocharger with a turbine (13) which has a variable turbine geometry, and
- of an exhaust-gas cooler (21) which is assigned to a part of an exhaust line and which serves for cooling the exhaust gas that is supplied, in the part of the exhaust line, to the turbine (13).

11. Drive assembly according to Claim 10,
**characterized**
**in that** the part of the exhaust line is an exhaust manifold (20).

12. Drive assembly according to Claim 11,
**characterized**
**in that** the exhaust manifold (20) is integrated in a cylinder head of the Otto-cycle engine (1).

13. Drive assembly according to one of the preceding Claims 10 to 12,
**characterized**
**in that** the Otto-cycle engine (1) has a geometric compression ratio of greater than 1:10 and less than 1:20.

14. Drive assembly according to Claim 13,
**characterized**
**in that** the Otto-cycle engine (1) has a geometric compression ratio of greater than 1:12 and less than 1:15.

15. Vehicle (300) having a drive assembly according to one of Claims 10 to 14.

## Revendications

1. Procédé de fonctionnement d'un groupe motopropulseur comprenant un moteur à allumage par étincelle (1), comprenant :
- la compression d'air de combustion acheminé à un cylindre (3) du moteur à allumage par étincelle (1) par le biais d'une soupape d'admission au moyen d'un turbocompresseur à gaz d'échappement (12), et
- la fermeture de la soupape d'admission avant qu'un piston dans le cylindre (3) n'atteigne un point mort bas,
**caractérisé par**
- l'utilisation d'un turbocompresseur à gaz d'échappement (12) avec une turbine (13) qui présente une géométrie de turbine variable, et
- le refroidissement du gaz d'échappement acheminé à la turbine (13) dans une partie d'une conduite de gaz d'échappement au moyen d'un refroidisseur de gaz d'échappement (21).

2. Procédé selon la revendication 1,
**caractérisé en ce que**
le gaz d'échappement est refroidi dans un collecteur de gaz d'échappement (20).

3. Procédé selon la revendication 1 ou 2,
**caractérisé en ce que**
pour le refroidissement du gaz d'échappement, on utilise un collecteur de gaz d'échappement (20) qui est intégré dans une culasse du moteur à allumage par étincelle (1).

4. Procédé selon l'une quelconque des revendications précédentes,
**caractérisé par**
l'ajustement de la géométrie de turbine variable du turbocompresseur à gaz d'échappement (12) en fonction d'une charge du moteur à allumage par étincelle (1).

5. Procédé selon l'une quelconque des revendications précédentes,
**caractérisé en ce que**
l'air de combustion (5) acheminé au cylindre est en outre comprimé avec un compresseur (10) à commande électrique.

6. Procédé selon l'une quelconque des revendications précédentes,
**caractérisé en ce que**
la soupape d'admission est fermée dans une plage de 35° à 90° d'angle de vilebrequin du moteur à allumage par étincelle (1) avant le point mort bas.

7. Procédé selon l'une quelconque des revendications précédentes,
**caractérisé en ce que**
le moteur à allumage par étincelle (1) comprend une commande de soupape variable, un angle auquel la soupape d'admission est fermée étant ajusté en fonction d'une charge du moteur à allumage par étincelle (1).

8. Procédé selon l'une quelconque des revendications précédentes,
**caractérisé en ce que**
du carburant est injecté directement dans le cylindre (3).

9. Procédé selon l'une quelconque des revendications précédentes,
**caractérisé en ce que**
l'air de combustion acheminé est comprimé dans le cylindre (3) du moteur à allumage par étincelle (1) avec un rapport de compression géométrique supérieur à 1:10 et inférieur à 1:20.

10. Groupe motopropulseur, en particulier pour mettre en oeuvre le procédé selon l'une quelconque des revendications précédentes, comprenant :
- un moteur à allumage par étincelle,
- un turbocompresseur à gaz d'échappement (12) pour comprimer de l'air de combustion acheminé à un cylindre (3) du moteur à allumage par étincelle (1) par le biais d'une soupape d'admission, et
- une commande de soupape qui est configurée pour fermer la soupape d'admission avant qu'un piston dans le cylindre (3) n'atteigne un point mort bas,
**caractérisé en ce que** l'on utilise
- un turbocompresseur à gaz d'échappement avec une turbine (13) qui présente une géométrie de turbine variable, et
- un refroidisseur de gaz d'échappement (21) qui est associé à une partie d'une conduite de gaz d'échappement pour le refroidissement du gaz d'échappement acheminé dans la partie de la conduite de gaz d'échappement de la turbine (13).

11. Groupe motopropulseur selon la revendication 10, **caractérisé en ce que**
la partie de la conduite de gaz d'échappement est un collecteur de gaz d'échappement (20).

12. Groupe motopropulseur selon la revendication 11,
**caractérisé en ce que**
le collecteur de gaz d'échappement (20) est intégré dans une culasse du moteur à allumage par étincelle (1).

13. Groupe motopropulseur selon l'une quelconque des revendications 10 à 12,
**caractérisé en ce que**
le moteur à allumage par étincelle (1) présente un rapport de compression géométrique supérieur à 1:10 et inférieur à 1:20.

14. Groupe motopropulseur selon la revendication 13,
**caractérisé en ce que**
le moteur à allumage par étincelle (1) présente un rapport de compression géométrique supérieur à 1:12 et inférieur à 1:15.

15. Véhicule (300) comprenant un groupe motopropulseur selon l'une quelconque des revendications 10 à 14.
